# EUROPEAN PATENT APPLICATION

(11) **EP 1 538 322 A2**
(43) Date of publication of application: **08.06.2005**
(21) Application number: 04256372.6
(22) Date of filing: 15.10.2004
(51) Int. Cl.: F02D 11/00

(54) **Pedal mechanism**

(30) Priority: 15.10.2003 GB 0324102
(71) Applicant: Caithness Development Ltd., Guernsey GY7 9FQ (GB)
(72) Inventor: Mannle, Erik, Hillmead, Swindon SN5 5WB (GB); Yadehigge, Sena, St. Saviours, Guernsey GF7 9FQ (GB)
(74) Representative: Wilson, Peter David

(57) **Abstract**

A pedal mechanism is provided for use in a drive by wire system. The plunger comprises an aperture through which the pin may pass, enabling the size of the mechanism to be reduced and reducing the possibility that the mechanism fails under excessive pedal force. The mechanism also comprises an angled friction surface, the angle of which may be varied to determine the force hysteresis of the pedal mechanism.

## Description

The invention relates to pedal mechanisms, and in particular to pedal mechanisms for use in drive-by-wire applications.

Pedal mechanisms for use in drive-by-wire applications and particularly for electronic throttle systems are well known. An acknowledged problem of the earliest pedal mechanisms for electronic throttle systems was that the pedal provided a poor 'feel' to the driver, as the mechanism had no force hysteresis. This issue has been addressed by the inclusion of force hysteresis devices within pedal mechanisms.

Typically the hysteresis device comprises a plunger which is moved over a friction surface by the movement of the pedal, with the materials used to form the plunger and the friction surface being selected to provide the required force hysteresis characteristic. The materials must also be able to withstand the pressure caused by the pedal urging the plunger into contact with the friction surface with no 'stick-slip' occurring, no excessive noise being generated by the movement of the plunger across the friction surface, and no mechanical wearing over the lifetime of the pedal mechanism. It has been found that the materials having the best frictional properties tend to have problems in bearing the pressure between the plunger and the friction surface. Using different materials that could cope with the pressure tended to cause problems with 'stick-slip', noise or wear. A compromise design and choice materials has resulted in a pedal mechanism that has a force hysteresis value of 6N in the idle position, when a value of 10N is preferred.

Furthermore, there is a trend for movable pedal boxes, such that the accelerator and brake pedals can be adjusted to suit the driver. When the pedals are fixed in a single position it is possible to provide a floor stop that limits the travel of the pedal arm. If the pedal box is movable then a floor stop can not be provided and thus it is necessary that the pedal mechanism can withstand a greater force, typically 900N as opposed to 500N, and that if the pedal is to fail that it fails safe, i.e. the pedal is returned to the idle position to prevent further vehicle acceleration. It has been found for some pedal designs that although the pedal arm is strong enough to withstand a 900N force, some of the internal parts of the pedal mechanism may undergo an elastic deformation, causing the pedal mechanism to fail such that the pedal will not be returned to the idle position.

According to a first aspect of the present invention there is provided a pedal mechanism comprising a pedal arm mounted on a base for rotation about a pivot axis, and a friction mechanism mounted between the pedal arm and the base for resisting movement about the pivot axis in one rotational direction and for assisting movement in the other rotational direction, the friction mechanism comprising a friction member on the pedal arm, and a friction surface mounted on the base, the friction member being biased into contact with the friction surface and being mounted on the pedal arm for movement across the friction surface against the biasing force, and the position of the friction member and the friction surface relative to the pivot axis being such that as the pedal arm rotates about the pivot axis, the friction member is urged against the biasing force to provide a resistance to rotational movement of the pedal in one rotational direction, and a restoring force assisting rotational movement of the pedal in the other rotational direction, the friction member comprising a column received at one end within the pedal arm, a friction element mounted on the other end of the column in frictional contact with a friction surface on the base and means for biasing the friction element in a direction towards the friction surface, the position of the friction element and column relative to the pivot axis being such that as the pedal arm rotates about the pivot axis, the column is urged either away from the pedal arm by pressure between the friction element and the surface of the base or toward the pedal arm by the biasing means, to provide a resistance to rotational movement of the pedal in one rotational direction, and a restoring force assisting rotational movement of the pedal in the other rotational direction, wherein the first end of the column is fixedly received in the pedal arm, the friction element is slideably received on the second end of the column, the friction element comprising an aperture, the second end of the column, in use, passing through the friction element aperture.

In a preferred embodiment of the invention, the movement of the pedal causes the second end of the column to pass through the friction element aperture. Furthermore the friction surface comprises a recessed channel wherein, in use, the second end of the column enters into the recessed channel. The friction surface may further comprise one or more contact surfaces disposed adjacent to the recessed channel, wherein, in use, the friction element is in contact with the one or more contact surfaces whilst the second end of the column is received within the recessed channel.

By allowing the column to pass through he friction element, a physical gap is provided that will tend to prevent the column from making contact with another part of the pedal mechanism when excessive forces are placed on the pedal, reducing the possibility that the pedal mechanism may fail.

Additionally the pedal mechanism may further comprise an enclosure, the enclosure comprising two walls that are perpendicular to each other, wherein the friction element is received on each of the walls. The friction element may be received at an angle between 30' and 50' relative to one of the walls, and preferably the friction element is received at an angle of about 40' relative to one of the walls.

It has been found that the angle of the friction element determines the magnitude of the force vector that in turn determines the force hysteresis value for the pedal mechanism.

The invention will now be described, by way of example only, with reference to the following Figures in which:
Figure 1 shows a cross-section of part of a pedal mechanism according to the present invention in the idle position;
Figure 2 shows the cross-section shown in Figure 1 when the pedal has been moved to the WOT (wide open throttle) position;
Figures 3 and 4 show schematic depictions of the plunger;
Figures 5 and 6 show schematic depictions of the friction surface; and
Figure 7 shows a partial cross-section of a schematic depiction of a pedal mechanism according to a further embodiment of the present invention, as seen from the front.

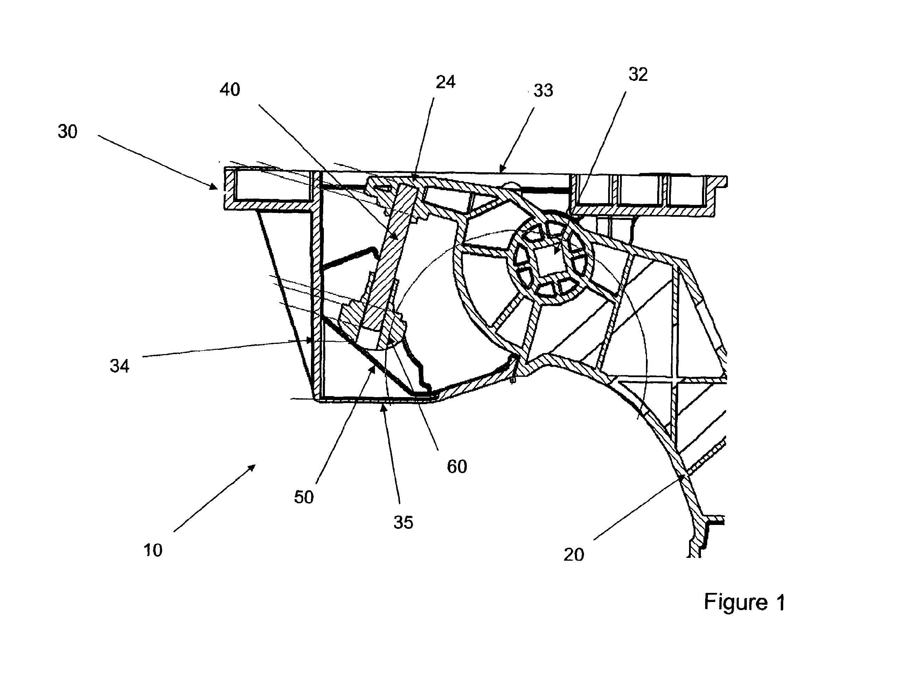

Figure 1 shows a cross-section of part of a pedal mechanism according to the present invention in the idle position. The pedal mechanism comprises pedal arm 20 that is received within enclosure 30. The pedal arm comprises pedal 25 (not shown) and receiving means 24 to receive securely a plunger pin 40. The pedal arm is received on pivot 32 such that the pedal arm can be rotated with respect to the enclosure 30. The plunger pin is securely held by the pedal arm at a first end and at the second end a plunger 60 is slideably mounted on the plunger pin so as to be in contact with a friction surface 50 that secured to the interior of the enclosure 30. The enclosure 30 further comprises a back wall 33, that will be attached to the vehicle to secure the pedal mechanism, a top wall 34 and front wall 35. The friction surface is connected at an angle between top wall 34 and front wall 35.

Figure 1 shows the pedal mechanism when the pedal is in the idle position. Depressing the pedal will cause the pedal arm 20 to rotate in an anti-clockwise direction such that the plunger 60 is moved across the friction surface 50.

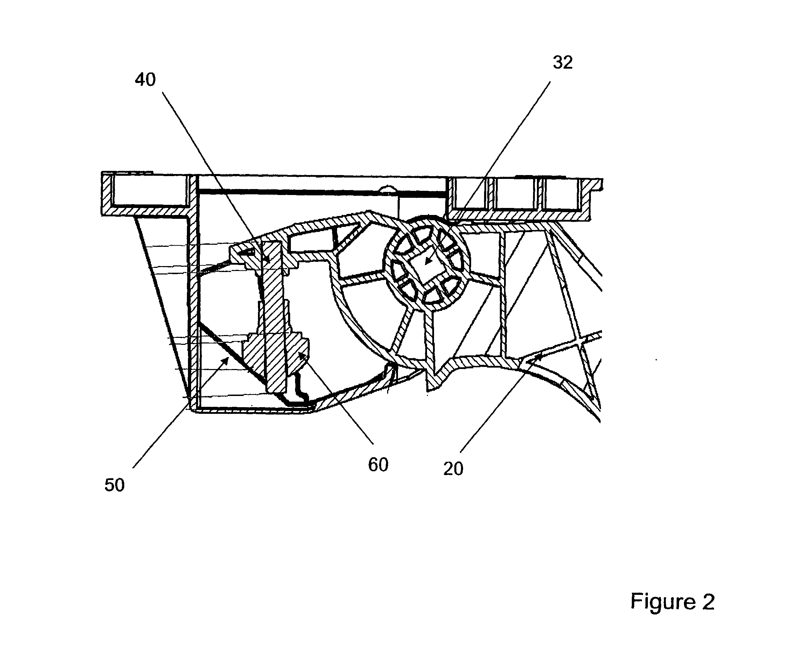

Figure 2 shows the cross-section shown in Figure 1 when the pedal has been moved to the WOT (wide open throttle) position. This has caused the pedal arm to be rotated relative to the enclosure such that the plunger pin is moved towards the friction surface 50 and the plunger is moved across the friction surface 50. The mechanism further comprises two helical springs (not shown) that are located between the plunger and the receiving means and that act against the movement of the pedal from the idle position and also urge the pedal back towards the idle position if pressure is removed from the pedal.

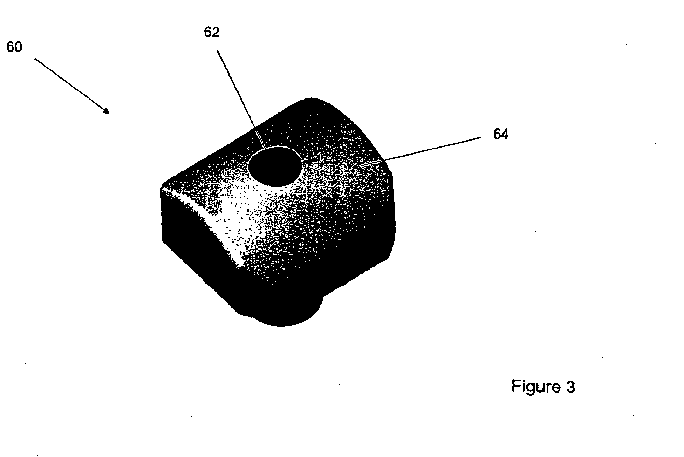

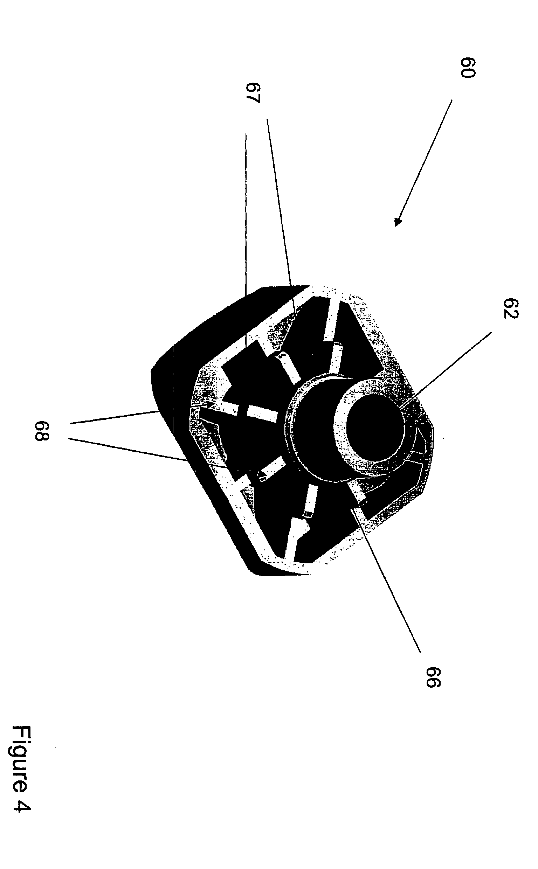

Figures 3 and 4 show schematic depictions of the plunger 60 which comprises a through passage 62, a curved contact surface 64 and elongated tubular section 66. The curved contact surface increases the contact area between the plunger and the friction surface and the elongated tubular section serves to maintain the plunger on the plunger pin when the pedal is in the idle position. The underside plunger of the plunger may comprise a plurality of ribs 67 separated by partial voids 68 as this reduces the weight of the plunger whilst maintaining its structural integrity.

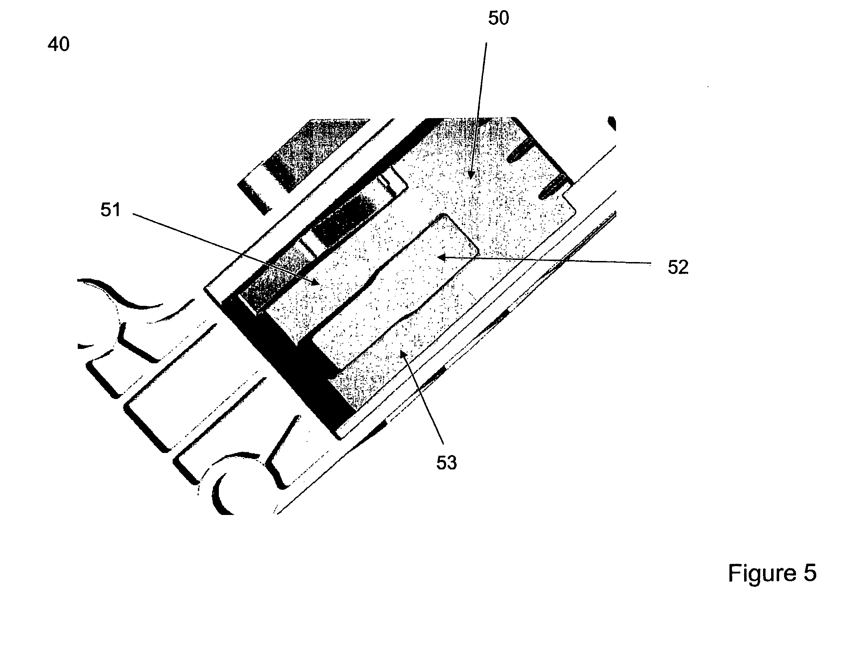

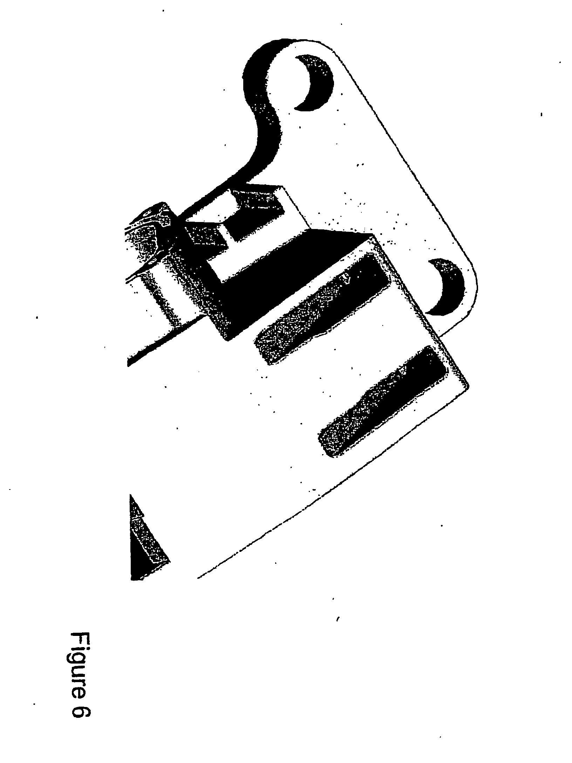

Figure 5 shows an overhead view of a schematic depiction of the friction surface 50. The friction surface 50 comprises a recessed channel 52 which is located between contact regions 51 and 53. The friction surface 50 is arranged so that as the pedal is rotated and the plunger pin moves through the plunger, the plunger is received within the recessed channel of the friction surface and the curved contact surface of the plunger is held in contact with the contact regions 51 and 53. Figure 6 shows the underside view of the friction surface shown in Figure 5.

When the pedal is in WOT the plunger pin will not interfere with the plunger but go through the plunger in the recessed channel. This prevents excessive forces being exerted on the either the plunger, the receiving means in the pedal arm or the friction surface, and still allows the clearance between plunger and plunger pin to be kept to a minimum.

The depth of the recessed channel is designed such that the plunger may be received within the recessed channel without making contact with the base of the channel when the pedal is in the WOT position. In an alternative embodiment, the base of the recessed channel may comprise a frangible region such that in the event that the plunger makes contact with the base of the recessed channel the frangible region will break, allowing the plunger to pass through without effecting the other regions of the friction surface.

The force hysteresis is generated by the force vector which passes through the point of contact between the plunger and friction surface and the pivot point of the pedal arm. Conventionally pedal mechanisms have provided the friction mechanisms on an internal wall of the enclosure but it has been found that by providing the friction surface at an angle between two internal walls of the enclosure it is possible to control the force hysteresis of the pedal mechanism.

It has been found that as the angle between the friction surface and the front wall of the enclosure is increased, the force vector between the plunger point of contact and the pedal arm pivot point will increase, thereby increasing the friction torque about the pedal arm pivot point. Furthermore, it has been found that a force hysteresis value in a desired range can be obtained by the angle between the friction surface and the front wall of the enclosure being between 30° and 50'. A preferred angle is about 39°, at which point it was found that the force hysteresis at the idle position, with an actuating pedal effort of about 20N, was about 10N. Thus it is possible to use existing and proven materials combinations for the plunger, plunger pin and friction surface and provide the required force hysteresis by altering the angle of the friction surface.

Because the force vector goes through the point of contact between the plunger and the friction surface and because the plunger is already supported by the plunger pin, the length of the elongated tubular section 62 of the plunger that is required is reduced. Ideally the plunger would not require an elongated section because the force vector holds the plunger pin in contact with the plunger. supported by the pin. As the force vector does not change the direction, but only its magnitude, the pin is always pressed against the plunger and this results in a very smooth movement of the plunger up and down the pin. Testing of a pedal mechanism according to the present invention has shown a very repeatable force hysteresis over time and also with variations in temperature without any noise or 'stick-slip'.

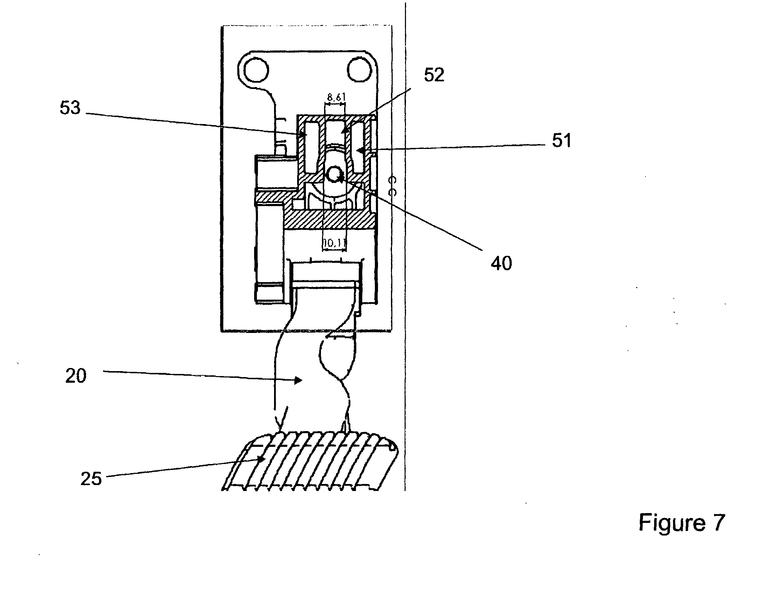

Figure 7 shows a partial cross-section of a schematic depiction of a pedal mechanism according to a further embodiment of the present invention, as seen from the front. Figure 7 shows the pedal 25 connected to the pedal arm 20, the plunger pin 40 received within the plunger 60, the recessed channel 52 for receiving the plunger pin and the contact regions 51, 53 of the friction surface 50. The enclosure may be provided with one or apertures 37 through which the pedal mechanism may be secured to a vehicle. For this embodiment of the present invention the width of the recessed channel increases from a first value to a second value along the length of the channel. The width of the channel is increased to reduce the risk of the pin interfering with the wall of the channel when a lateral force is applied to the pin. The same result may also be achieved by limiting the axial clearance of the plunger to be smaller than the clearance of the plunger pin in channel.

## Claims

1. A pedal mechanism comprising a pedal arm (20) mounted on a base for rotation about a pivot (32) axis, and a friction mechanism (50, 60) mounted between the pedal arm (20) and the base (30) for resisting movement about the pivot axis in one rotational direction and for assisting movement in the other rotational direction, the friction mechanism comprising a friction member (60) on the pedal arm, and a friction surface (50) mounted on the base, the friction member (60) being biased into contact with the friction surface (50) and being mounted on the pedal arm for movement across the friction surface against the biasing force, and the position of the friction member and the friction surface relative to the pivot axis being such that as the pedal arm rotates about the pivot axis, the friction member is urged against the biasing force to provide a resistance to rotational movement of the pedal in one rotational direction, and a restoring force assisting rotational movement of the pedal in the other rotational direction, the friction member comprising a column (40) received at one end within the pedal arm, a friction element mounted on the other end of the column in frictional contact with a friction surface on the base and means for biasing the friction element in a direction towards the friction surface, the position of the friction element and column relative to the pivot axis being such that as the pedal arm rotates about the pivot axis, the column is urged either away from the pedal arm by pressure between the friction element and the surface of the base or toward the pedal arm by the biasing means, to provide a resistance to rotational movement of the pedal in one rotational direction, and a restoring force assisting rotational movement of the pedal in the other rotational direction, **characterised in that**:
the first end of the column (40) is fixedly received in the pedal arm; the friction element (60) is slideably received on the second end of the column (40), the friction element comprising an aperture (62), the second end of the column (40), in use, passing through the friction element aperture (62).

2. A pedal mechanism according to claim 2, wherein the movement of the pedal causes the second end of the column (40) to pass through the friction element aperture (62).

3. A pedal mechanism according to claim 1 or claim 2, wherein the friction surface (50) comprises a recessed channel (52) wherein, in use, the second end of the column (40) enters into the recessed channel.

4. A pedal mechanism according to claim 3, whereon the friction surface further comprises one or more contact surfaces (51, 53) disposed adjacent to the recessed channel (52), wherein, in use, the friction element (60) is in contact with the one or more contact surfaces (51, 53) whilst the second end of the column (40) is received within the recessed channel (52).

5. A pedal mechanism according to any preceding claim, wherein the pedal mechanism further comprises an enclosure (30), the enclosure comprising two walls (34, 35) that are substantially perpendicular to each other, wherein the friction element (50) is received on each of the walls.

6. A pedal mechanism according to claim 5, wherein the friction element (50) is received at an angle between 30' and 50' relative to one of the walls (34, 35).

7. A pedal mechanism according to claim 6, wherein the friction element (50) is received at an angle of about 40° relative to one of the walls (34, 35).
